# EUROPÄISCHE PATENTSCHRIFT

(11) **EP 1 716 260 B1**
(45) Veröffentlichungstag und Bekanntmachung des Hinweises auf die Patenterteilung: **09.01.2008**
(21) Anmeldenummer: 05707232.4
(22) Anmeldetag: 05.02.2005
(51) Int. Cl.: C21D 7/04, B21K 1/08, B23P 9/04, B24B 39/04

(54) **VERFAHREN ZUR STEIGERUNG DER DAUERSCHWINGFESTIGKEIT, INSBESONDERE DER BIEGEWECHSELFESTIGKEIT UND DER TORSIONSWECHSELFESTIGKEIT VON KURBELWELEN**
METHOD FOR INCREASING THE ENDURANCE LIMIT, IN PARTICULAR THE BENDING STRENGTH AND TORSIONAL STRENGTH OF CRANKSHAFTS
PROCEDE D'AUGMENTATION DE LA LIMITE DE FATIGUE, NOTAMMENT DE LA RESISTANCE A LA FLEXION ALTERNEE ET DE LA RESISTANCE A LA TORSION ALTERNEE D'ARBRES DE VILEBREQUINS

(30) Priorität: 23.02.2004 DE 102004008728
(43) Veröffentlichungstag der Anmeldung: 02.11.2006
(73) Patentinhaber: Maschinenfabrik Alfing Kessler GmbH, 73433 Aalen-Wasseralfingen (DE)
(72) Erfinder: REEB, Alfons, 73434 Aalen (DE); SCHMIDT, Jochen, 73529 Schwäbisch Gmünd (DE); BÖMCKE, Alexis, 73431 Aalen (DE)
(74) Vertreter: Lorenz, Markus
(86) Internationale Anmeldenummer: PCT/EP2005/001190
(87) Internationale Veröffentlichungsnummer: WO 2005/090617

(56) Entgegenhaltungen:
- DE-A1- 3 438 742
- US-A- 2 888 846
- PATENT ABSTRACTS OF JAPAN Bd. 009, Nr. 138 (C-286), 13. Juni 1985 (1985-06-13) & JP 60 024319 A (HONDA GIKEN KOGYO KK), 7. Februar 1985 (1985-02-07)

## Beschreibung

Die Erfindung betrifft ein Verfahren zur Steigerung der Dauerschwingfestigkeit, insbesondere der Biegewechselfestigkeit und der Torsionswechselfestigkeit von Kurbelwellen, insbesondere von Großkurbelwellen, durch lokales Hämmern von hochbeanspruchten Bereichen, wie Hohlkehlen, Bohrungsmündungen und Querschnittsübergängen, mittels Druckimpulsmaschinen oder Schlagvorrichtungen, die über Schlagwerkzeuge Druckeigenspannungen in die Kurbelwelle einbringen. Die Erfindung betrifft auch eine Vorrichtung zur Steigerung der Dauerschwingfestigkeit von Kurbelwellen.

Ein Verfahren und eine Vorrichtung dieser Art ist in der DE 34 38 742 C2 beschrieben.

Um ein nachteiliges Einbringen von tangentialen Spannungen beim örtlichen Hämmern zu vermeiden, ist dabei vorgeschlagen worden, zum Zeitpunkt der Druckimpulseinwirkung zwischen dem den Impuls ausgebenden Körper und der Werkstückoberfläche quer zur Impulsrichtung keine Relativbewegung stattfinden zu lassen. Hierzu soll der Vorschub während der Einbringung von Druckeigenspannungen durch die Schlagwerkzeuge schrittweise erfolgen.

Der vorliegenden Erfindung liegt die Aufgabe zugrunde, das eingangs erwähnte Verfahren weiterzuverbessern, insbesondere hinsichtlich Wirksamkeit und Erhöhung der Dauerschwingfestigkeit, insbesondere der Biegewechselfestigkeit und der Torsionswechselfestigkeit.

Erfindungsgemäß wird diese Aufgabe dadurch gelöst, dass die Kurbelwelle während der Bearbeitung kontinuierlich gedreht wird, wobei während der Druckeigenspannungseinbringung durch das Auftreffen des Schlagwerkzeugs auf das zu bearbeitende Kurbelwellensegment die Drehbewegung der Kurbelwelle während der Einwirkungszeit des Schlagwerkzeuges auf die Kurbelwelle gestoppt wird.

Bei dem erfindungsgemäßen Verfahren werden wie beim Stand der Technik tangentiale Spannungen weitgehend, wenn nicht sogar vollständig vermieden.

Um dies zu erreichen, wird erfindungsgemäß die Einwirkungszeit des Schlagwerkzeugs und werden die Schlagdrücke so gewählt, dass die Drehbewegung der Kurbelwelle zwangsweise gestoppt wird.

Im Unterschied zum Stand der Technik kann auf diese Weise das Verfahren mit einem kontinuierlichen Antrieb für die Kurbelwelle betrieben werden, wodurch die erfindungsgemäße Vorrichtung entsprechend einfach ausgestaltet werden kann.

Hierzu ist es lediglich erforderlich, die Schlagfrequenz und die Schlagdrücke bzw. Schlagkräfte so zu wählen, dass der Drehantrieb für die Kurbelwelle und die damit verbundenen Teile, wie Getriebe, die aufgebrachten "Zwangsstopps" ohne Schäden verkraften.

Praktisch wird durch die "Zwangsstopps" das gesamte Antriebssystem wie eine Feder gespannt, welche anschließend wieder entspannt wird und die Drehbewegung für die Kurbelwelle entsprechend wieder einsetzt.

In der Praxis haben sich vorteilhafte Schlagfrequenzen zwischen 0,1 und 20 Hz, bevorzugt zwischen 1 und 10 Hz, noch stärker bevorzugt zwischen 3 und 6 Hz, herausgestellt. Die Schlagdrücke sollten - je nach Betrieb - zwischen 10 und 300 bar, bevorzugt zwischen 30 und 130 bar, noch stärker bevorzugt zwischen 50 und 120 bar, betragen.

Mit den vorstehend genannten Werten lässt sich das erfindungsgemäße Verfahren in der Praxis in optimaler Weise durchführen.

Die Temperatur im Bereich des zu bearbeitenden Kurbelwellensegments sollte nicht höher als 65 °C liegen; bevorzugt werden Werte zwischen 12 und 25 °C.

Das erfindungsgemäße Verfahren kann auch bei Kurbelwellen angewendet werden, die bereits vorher zur Steigerung ihrer Dauerfestigkeitseigenschaften durch andere Verfahren bearbeitet worden sind. So kann z.B. auch eine Kurbelwelle, die durch Induktionshärten bearbeitet worden ist, nachträglich noch bezüglich ihrer Biegewechselfestigkeit und Dauerschwingfestigkeit durch eine Einbringung von Druckeigenspannungen nach dem erfindungsgemäßen Verfahren verbessert werden.

In der Praxis hat sich herausgestellt, dass es durch die Einbringung von Druckeigenspannungen über das Schlagwerkzeug, welche im allgemeinen eine Kugelform aufweist, aufgrund von Materialaufwürfen zu Oberflächenrissen auch ohne Beanspruchung kommen kann. Im allgemeinen breiten sich diese Risse nicht weiter aus und sind auch nicht gravierend bezüglich der Dauerfestigkeitseigenschaften, aber sie stören zumindest das optische Erscheinungsbild. In einer erfindungsgemäßen Ausgestaltung der Erfindung kann deshalb vorgesehen sein, dass nach der Einbringung von Druckeigenspannungen durch die Schlagwerkzeuge die oberflächennahen Druckeigenspannungen durch Abarbeiten der Oberfläche des zu bearbeitenden Kurbelwellensegments reduziert und die Verformungsanrisse an der Oberfläche entfernt werden.

Da die Einbringung von Druckeigenspannungen bis zu einer Tiefe von 15 mm und auch noch tiefer erfolgen kann, bedeutet dies, im Oberflächenbereich kann eine Abtragung von einigen Millimetern, z.B. von 0,3 bis 2 mm, vorzugsweise 0,5 mm, erfolgen, ohne dass die Biegewechselfestigkeit oder die Dauerschwingfestigkeit der Kurbelwelle darunter entscheidend leidet.

Die Abtragung der Oberfläche kann auf verschiedene Weise erfolgen, wie z.B. durch Schleifen, Drehen oder Fräsen.

Insbesondere bei Großkurbelwellen wird häufig bei Hohlkehlenradien eine sogenannte Korbbogenform gewählt. Häufig möchte man einen sehr großen Übergangsradius haben, um die Lastspannung relativ klein zu halten, andererseits wird ein relativ kleiner Radius am Übergang zur Lauffläche gewünscht, um eine möglichst breite Lauffläche zu erhalten.

Die technisch sinnvolle Einbringung von Druckeigenspannungen in eine Korbbogenform gestaltet sich in der Praxis bisher jedoch problematisch.

Erfindungsgemäß wird zur Lösung des Problems in einer Weiterbildung nunmehr vorgeschlagen, dass bei einer Ausgestaltung des zu bearbeitenden Kurbelwellensegments in Korbbogenform, die als Vorkontur gestalteten kontinuierlichen Übergangsradien gestaltet werden, durch die Einbringung der Druckeigenspannungen durch die Schlagwerkzeuge verdichtet und anschließend die Übergangsradien auf die erforderliche Endkontur als Korbbogenform durch ein Abtragverfahren der Oberfläche bearbeitet werden.

Dies bedeutet, es ist eine Vorkontur mit einem kontinuierlichen Übergangsradius vorgesehen, der dem großen Übergangsradius entspricht. Dieser Radius wird durch die Schlagverfestigung mit dem Schlagwerkzeug verdichtet und anschließend erfolgt die Bearbeitung der Übergangsradien auf die erforderliche Endkontur in Korbbogenform mit einem entsprechend großen Übergangsradius und einem deutlich kleineren Radius am Übergang zur Lauffläche.

Diese Bearbeitung kann in gleicher Weise wie die Oberflächenbearbeitung zur Beseitigung bzw. Vermeidung von Anrissen, z.B. durch Schleifen, Drehen oder Fräsen erfolgen.

Alternativ hierzu kann vorgesehen sein, dass bei einer Ausgestaltung des zu bearbeitenden Kurbelwellensegments in Korbbogenform die Korbbogenform eines Schlagwerkzeugs in einer Ebene gebildet ist, die sich in Längsrichtung der Kurbelwelle erstreckt, während in einer Ebene senkrecht zur Längsrichtung z.B. eine Kugelform gebildet ist.

Durch ein derartiges Schlagwerkzeug, das somit nicht mehr die übliche Form einer Kugel im Schlagbereich besitzt, kann in einem Arbeitsgang die Konturenform verdichtet und damit ohne Weiterbearbeitung hergestellt werden.

Anstelle von zwei Schlagwerkzeugen pro Schlagmaschine kann auch vorgesehen sein, dass die Druckimpulsvorrichtungen oder Schlagmaschinen jeweils mit ihren Längsachsen in Schlagrichtung ausgerichtet sind, und dass die Einbringung von Druckeigenspannungen durch jeweils nur ein in der dazugehörigen Druckimpulsvorrichtung oder Schlagmaschine angeordnetes Schlagwerkzeug erfolgt.

Durch diese Ausgestaltung bleibt für alle Schlagbereiche ein Linienkontakt mit dem zu bearbeitenden Kurbelwellensegment erhalten.

Das erfindungsgemäße Verfahren kann nicht nur zur Steigerung der Biegewechselfestigkeit und der Dauerschwingfestigkeit von Kurbelwellen verwendet werden, sondern in einer vorteilhaften Weise auch zum Richten von länglichen Bauteilen, insbesondere von Kurbelwellen. Dabei werden lokal begrenzt Druckeigenspannungen durch das erfindungsgemäße Verfahren mit den Schlagwerkzeugen eingebracht, um eine entsprechend verbogene Kurbelwelle gerade zu richten. Hierzu müssen die Schlagwerkzeuge lediglich an den entsprechenden Stellen angeordnet werden. Im Unterschied zu den bekannten Richtverfahren hat dieses erfindungsgemäße Verfahren keine negativen Auswirkungen auf die Dauerschwingfestigkeit. Im Gegenteil, als Nebeneffekt wird bei dem erfindungsgemäßen Verfahren die Dauerfestigkeit der Kurbelwelle bzw. des länglichen Bauteils sogar noch positiv beeinflusst.

Obwohl das erfindungsgemäße Verfahren für die Bearbeitung von Kurbelwellen beschrieben ist, ist es grundsätzlich auch für andere längliche Bauteile, wie z.B. Kompressorwellen, Exzenterwellen oder Zapfenkreuzwellen, geeignet. Grundsätzlich betrifft die Erfindung alle Bauteile, die besonders dynamisch belastet werden.

Nachfolgend sind Ausführungsbeispiele der Erfindung anhand der Zeichnung prinzipmäßig beschrieben.

Es zeigt:
- Fig. 1: eine Gesamtansicht einer Vorrichtung zur Durchführung des Verfahrens;
- Fig. 2: eine Druckimpulsmaschine in vergrößerter Darstellung gemäß Einzelheit "A" aus Fig. 1;

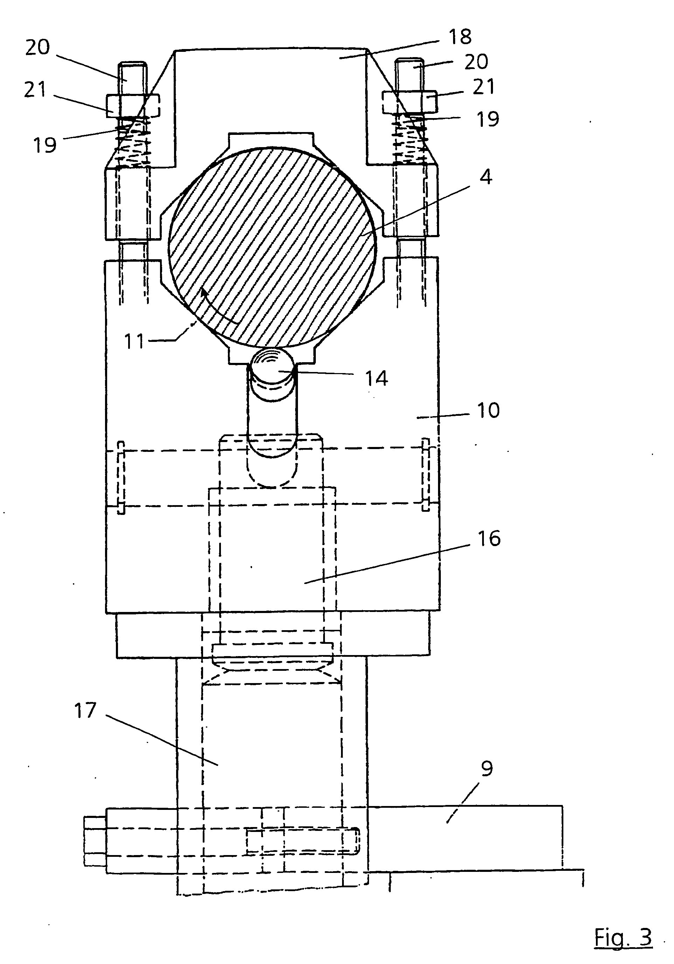

- Fig. 3: einen Schnitt III-III durch die Kurbelwelle zur Darstellung der Druckimpulsmaschine nach der Fig. 2 in axialer Richtung;
- Fig. 4: eine Seitenansicht eines Schlagwerkzeugs in Korbbogenform;
- Fig. 5: eine Ansicht des Schlagwerkzeugs in axialer Richtung (Pfeilrichtung A von Fig. 4); und
- Fig. 6: ausschnittsweise eine Druckimpulsmaschine mit nur einem Schlagwerkzeug.

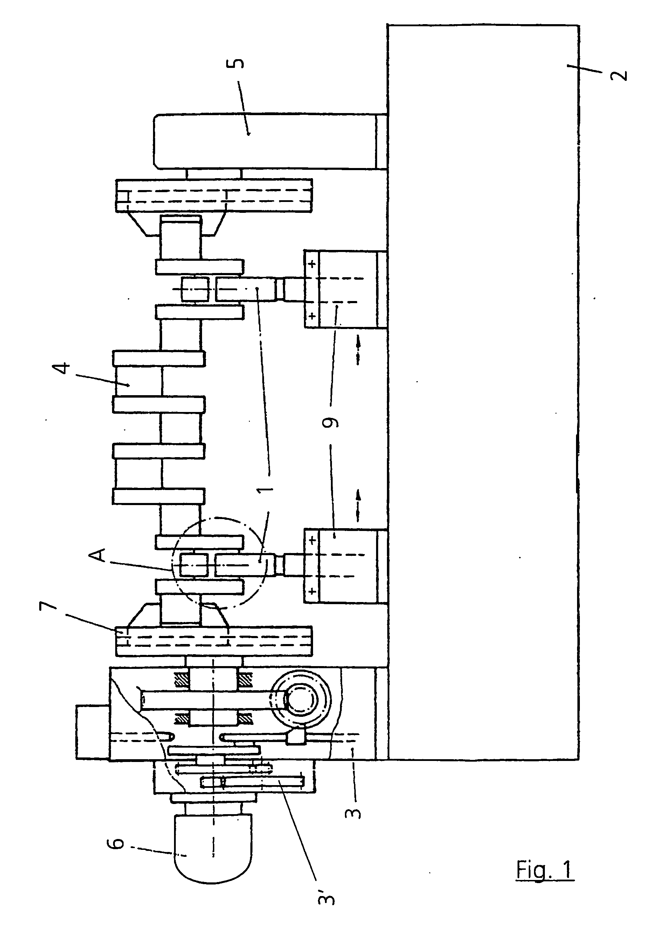

Die in der Fig. 1 in einer Gesamtansicht dargestellte Vorrichtung entspricht grundsätzlich in ihrem Aufbau der Vorrichtung nach der DE 34 38 742 C2 mit mehreren Druckimpulsmaschinen 1, weshalb nachfolgend nur auf die wesentlichen Teile und auf die Unterschiede zum Stand der Technik näher eingegangen wird.

Die Vorrichtung weist ein Maschinenbett 2 und einen Getriebekasten 3 mit einem Getriebe 3' auf, um ein Werkstück, nämlich eine Kurbelwelle 4, in eine Drehbewegung zu versetzen. Am von dem Getriebekasten 3 und dem Getriebe 3' abgewandten Ende ist die Kurbelwelle 4 in einer Abstützung 5 drehbar aufgenommen.

Ein Antrieb 6 sorgt über das Getriebe 3' für eine kontinuierliche Drehbewegung der Kurbelwelle 4, die in einer Spannscheibe 7 aufgenommen ist.

Die nachfolgend beschriebenen Druckimpulsmaschinen 1 (in der Zeichnung sind zwei dargestellt) sind jeweils in einer Verschiebe- und Justiereinrichtung 9 justierbar gehalten, um sie an die Lage und die Länge der Kurbelwelle 4 anzupassen.

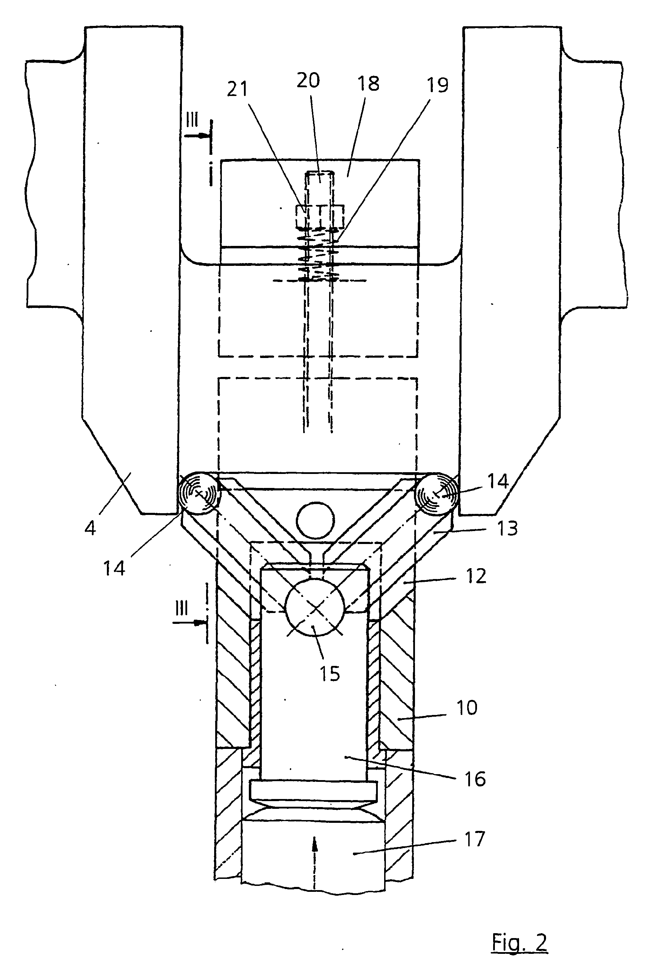

In der Fig. 2 ist die Ausbildung einer Druckimpulsmaschine 1 näher dargestellt. Sie weist einen Grundkörper 10 auf, der entsprechend dem Radius des zu bearbeitenden Kurbelwellensegments mit einer prismatischen Anlage 11 versehen ist und in sich Führungen 12 aufweist, die zwei Döpper 13 in deren Abstützebene führen und ihnen im Abstützwinkel um einen Bolzen 15 eine entsprechende Freiheit geben, die zur Anpassung an die maßlichen Verhältnisse der Kurbelwelle 4 erforderlich sind. An den vorderen Enden der beiden Döpper 13 ist jeweils eine Kugel als Schlagwerkzeug 14 angeordnet. Ein Zwischenteil 16 stellt die Verbindung zwischen einem Schlagkolben 17 und einem Bolzen 15, der die Schlagenergie an die Döpper 13 weitergibt, her.

Zur Steigerung der Wirksamkeit des Schlages kann auf der Gegenseite des Grundkörpers 10 ein Spannprisma 18 über Federn 19 mit einstellbaren Spannbolzen 20 mit Spannmuttern 21 befestigt werden.

Durch Anordnung mehrerer Druckimpulsmaschinen 1 über die Länge der zu bearbeitenden Kurbelwelle 4 können im Bedarfsfalle alle zentrisch und gegebenenfalls exzentrisch laufenden Bereiche gleichzeitig bearbeitet werden.

Der Antrieb 6 und das Getriebe 3' sind so ausgestaltet, dass sie eine kontinuierliche Drehbewegung der Kurbelwelle 4 bewirken. Sobald die Schlagwerkzeuge 14 jedoch auf die Kurbelwelle 4 treffen, wird die Drehbewegung zwangsweise unterbrochen bzw. wird die Kurbelwelle 4 während der Dauer des Auftreffens der Schlagwerkzeuge 14 aufgrund der hohen Schlagstärke angehalten. Damit baut sich zwar eine Spannung in dem Getriebe 3' auf, aber aufgrund einer speziellen Getriebekupplung im Zusammenspiel und speziell angepassten Getriebespiel führt dies zu keinen Schäden. Vorzugsweise wird mit einer Schlagfrequenz von 3 bis 6 Hz und Druckkräften von 50 bis 120 bar operiert.

Zur Vermeidung bzw. Verminderung von Anrissen, kann die Kurbelwelle 4 an den bearbeiteten Kurbelwellensegmenten im Bedarfsfalle noch mit einem Schleif-, Fräs- oder Drehwerkzeug auf eine Tiefe von 1,5 mm abgetragen werden.

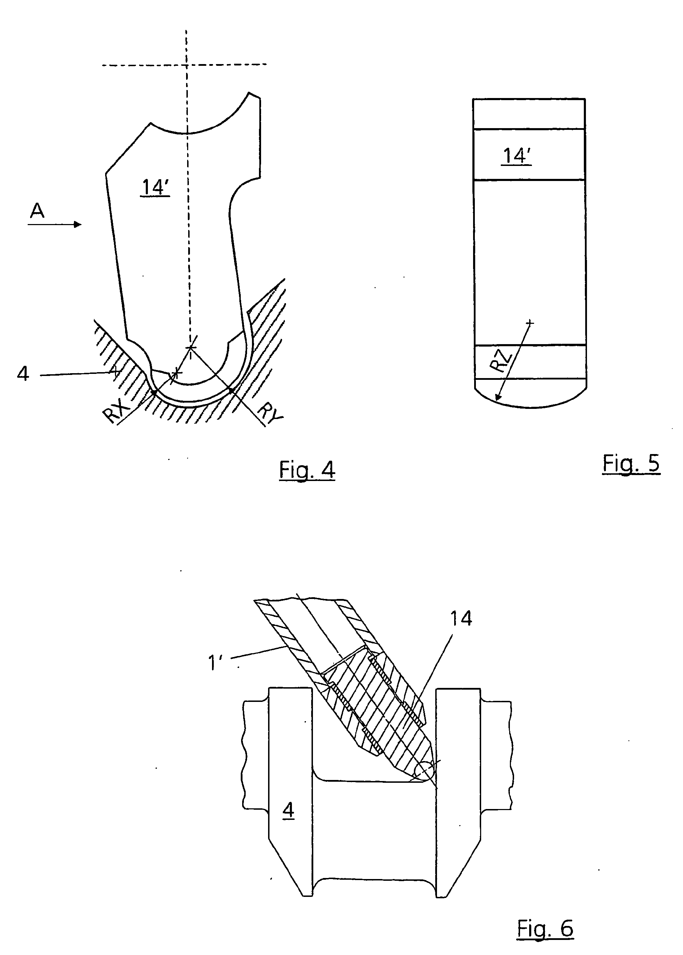

Aus den Figuren 4 und 5 ist ein Schlagwerkzeug 14' ersichtlich, das eine Korbbogenform aufweist, um Radienübergänge in Korbbogenform zu verfestigen. Wie ersichtlich, weist das Schlagwerkzeug 14' in Längsrichtung der Kurbelwelle 4 zwei unterschiedliche Radien auf, nämlich einen größeren Radius Ry, welcher z.B. einen Radius von 17 mm aufweist, und einen kleineren Radius Rx mit z.B. einem Radius von 8 mm. Der kleinere Radius Rx stellt den Übergangsradius zu einer Lauffläche dar. Wie aus der Fig. 5 ersichtlich ist, besitzt das Schlagwerkzeug 14' in einer Richtung senkrecht zur Richtung der Korbbogenform des Schlagwerkzeuges 14, d.h. quer zur Längsachse der Kurbelwelle 4, einen Kugelradius Rz.

Aus der Fig. 6 ist eine Druckimpulsmaschine 1' ersichtlich, die mit nur einem Schlagwerkzeug 14 versehen ist. In diesem Falle ist die Druckimpulsmaschine 1' zur Kurbelwelle 4 schräg gestellt und zwar derart, dass das Schlagwerkzeug 14, das koaxial zur Längsachse der Druckimpulsmaschine 1' angeordnet ist, senkrecht auf den Bereich des zu bearbeitende Kurbelwellensegmentes auftrifft. In diesem Fall lässt sich zwar jeweils nur ein Kurbelwellensegment bearbeiten, aber andererseits ist die konstruktive Ausgestaltung und die Kraftübertragung der Druckimpulsmaschine 1' hierfür besser und einfacher. Zusätzlich können dabei Bohrungsendungen mit diesem Werkzeug stehend verfestigt werden.

Besonders vorteilhaft erweist sich diese Ausgestaltung für die Anwendung an nicht symmetrischen Kurbelwellensegmenten wie der Endbereiche und der Ölbohrungsendungen; aber auch an weiteren Bauteilen, insbesondere an Segmenten mit welchen die Druckeigenspannungen nicht symmetrisch eingebracht werden können.

## Patentansprüche

1. Verfahren zur Steigerung der Dauerschwingfestigkeit, insbesondere der Biegewechselfestigkeit und der Torsionswechselfestigkeit von Kurbelwellen, insbesondere von Großkurbelwellen, durch lokales Hämmern von hochbeanspruchten Bereichen, wie Hohlkehlen, Bohrungsmündungen und Querschnittsübergängen, mittels Druckimpulsmaschinen oder Schlagvorrichtungen, die über Schlagwerkzeuge, die nur eine Relativbewegung in einer Ebene senkrecht zur Oberfläche des Kurbelwellensegments ausführen, Druckeigenspannungen in die Kurbelwelle einbringen,
**dadurch gekennzeichnet, dass**
die Kurbelwelle (4) während der Bearbeitung kontinuierlich gedreht wird, und dass während der Druckeigenspannungseinbringung beim Auftreffen des Schlagwerkzeugs (14) auf das zu bearbeitende Kurbelwellensegment die Einwirkungszeit des Schlagwerkzeugs (14) und die Schlagdrücke so gewählt sind, dass die Drehbewegung der Kurbelwelle (4) zwangsweise gestoppt wird.

2. Verfahren nach Anspruch 1,
**dadurch gekennzeichnet, dass**
die Schlagfrequenz des Schlagwerkzeugs (14) zwischen 0,1 und 20 Hz, vorzugsweise zwischen 1 und 10 Hz, beträgt.

3. Verfahren nach Anspruch 2,
**dadurch gekennzeichnet, dass**
die Schlagfrequenz des Schlagwerkzeugs (14) zwischen 3 bis 6 Hz beträgt.

4. Verfahren nach Anspruch 1,
**dadurch gekennzeichnet, dass**
die Schlagdrücke des Schlagwerkzeugs (14) zwischen 10 und 300 bar, vorzugsweise zwischen 30 bis 130 bar, liegen.

5. Verfahren nach Anspruch 4,
**dadurch gekennzeichnet, dass**
die Schlagdrücke des Schlagwerkzeugs (14) zwischen 50 bis 110 bar betragen.

6. Verfahren nach einem der Ansprüche 1 bis 5,
**dadurch gekennzeichnet, dass**
die Temperatur im Bereich des zu bearbeitenden Kurbelwellensegments unter 65 °C, vorzugsweise zwischen 12 und 25 °C, beträgt.

7. Verfahren nach Anspruch 1,
**dadurch gekennzeichnet, dass**
die Einbringung von Druckeigenspannungen durch die Schlagwerkzeuge (14) auf Kurbelwellen (4) erfolgt, die bereits vorher durch ein Verfahren zur Steigerung der Dauerfestigkeitseigenschaften bearbeitet worden sind.

8. Verfahren nach Anspruch 7,
**dadurch gekennzeichnet, dass**
die Einbringung von Druckeigenspannungen durch die Schlagwerkzeuge (14) nach einer Induktionshärtung der Kurbelwelle (4) erfolgt.

9. Verfahren nach einem der Ansprüche 1 bis 8,
**dadurch gekennzeichnet, dass**
nach der Einbringung von Druckeigenspannungen durch die Schlagwerkzeuge (14) die oberflächennahen Druckeigenspannungen durch Abarbeiten der Oberfläche des zu bearbeitenden Kurbelwellensegments reduziert werden.

10. Verfahren nach Anspruch 9,
**dadurch gekennzeichnet, dass**
die Oberfläche des bearbeiteten Kurbelwellensegments bis zu 3 mm, vorzugsweise zwischen 0,3 und 2 mm, abgetragen wird.

11. Verfahren nach Anspruch 9 oder 10,
**dadurch gekennzeichnet, dass**
die Abtragung durch Schleifen, Drehen oder Fräsen erfolgt.

12. Verfahren nach einem der Ansprüche 1 bis 11,
**dadurch gekennzeichnet, dass**
bei einer Ausgestaltung des zu bearbeitenden Kurbelwellensegments in Korbbogenform die als Vorkontur gestalteten kontinuierlichen Übergangsradien durch die Einbringung der Druckeigenspannungen über die Schlagwerkzeuge (14') verdichtet und anschließend die Übergangsradien auf die erforderliche Endkontur als Korbbogenform durch ein Abtragverfahren der Oberfläche bearbeitet werden.

13. Verfahren nach einem der Ansprüche 1 bis 12,
**dadurch gekennzeichnet, dass**
bei einer Ausgestaltung des zu bearbeitenden Kurbelwellensegments in Korbbogenform die Schlagwerkzeuge (14) mit der gewünschten Korbbogenform versehen sind.

14. Verfahren nach Anspruch 13,
**dadurch gekennzeichnet, dass**
die Korbbogenform eines Schlagwerkzeugs (14) in einer Ebene gebildet ist, die sich in Längsrichtung der Kurbelwelle (4) erstreckt, während in einer Ebene senkrecht zur Längsrichtung eine Kugelform gebildet ist.

15. Verfahren nach einem der Ansprüche 1 bis 14,
**dadurch gekennzeichnet, dass**
die Druckimpulsvorrichtungen oder Schlagmaschinen (1) jeweils mit ihren Längsachsen in Schlagrichtung ausgerichtet sind, und dass die Einbringung von Druckeigenspannungen durch jeweils nur ein in der dazugehörigen Druckimpulsvorrichtung oder Schlagmaschine (1) angeordnetes Schlagwerkzeug (14) erfolgt.

## Claims

1. Method for increasing the endurance limit, in particular the bending fatigue limit and the torsional fatigue limit of crankshafts, in particular of large crankshafts, by local hammering of highly loaded areas, such as grooves, hole mouths and cross-sectional transitions, by means of pulsed-pressure machines or striking apparatuses which introduce internal compressive stresses into the crankshaft via striking tools, which execute only a relative movement in a plane perpendicular to the surface of the crankshaft segment,
**characterised in that**
the crankshaft (4) being rotated continuously during the processing, and **in that**, during the introduction of the internal compressive stresses upon impact of the striking tool (14) on the crankshaft segment to be processed, the time of action of the striking tool (14) and the striking pressures are chosen such that the rotational movement of the crankshaft (4) is forcibly stopped.

2. Method according to Claim 1,
**characterised in that**
the striking frequency of the striking tool (14) is between 0.1 and 20 Hz, preferably between 1 and 10 Hz.

3. Method according to Claim 2,
**characterised in that**
the striking frequency of the striking tool (14) is between 3 and 6 Hz.

4. Method according to Claim 1,
**characterised in that**
the striking pressures of the striking tool (14) are between 10 and 300 bar, preferably between 30 and 130 bar.

5. Method according to Claim 4,
**characterised in that**
the striking pressures of the striking tool (14) are between 50 and 110 bar.

6. Method according to one of Claims 1 to 5, **characterised in that**
the temperature in the region of the crankshaft segment to be processed is less than 65°C, preferably between 12 and 25°C.

7. Method according to Claim 1,
**characterised in that**
the internal compressive stresses are introduced by means of the striking tools (14) on crankshafts (4) which have already previously been processed by a method for increasing the fatigue properties.

8. Method according to Claim 7,
**characterised in that**
the internal compressive stresses are introduced by the striking tools (14) after induction hardening of the crankshaft (4).

9. Method according to one of Claims 1 to 8, **characterised in that**,
after the introduction of the internal compressive stresses by the striking tools (14), the internal compressive stresses close to the surface are reduced by machining away the surface of the crankshaft segment to be processed.

10. Method according to Claim 9,
**characterised in that**
up to 3 mm, preferably between 0.3 and 2 mm, of the surface of the processed crankshaft segment is removed.

11. Method according to Claim 9 or 10,
**characterised in that**
the removal is carried out by grinding, turning or milling.

12. Method according to one of Claims 1 to 11, **characterised in that**,
in a configuration of the crankshaft segment to be processed of compound curve shape, the continuous transition radii which are formed as an initial contour are compressed by the introduction of the internal compressive stresses via the striking tools (14'), and the transition radii are subsequently processed to the required final contour as a compound curve by a method for removing material from the surface.

13. Method according to one of Claims 1 to 12, **characterised in that**,
in a configuration of the crankshaft segment to be processed of compound curve shape, the striking tools (14) are provided with the desired compound curve shape.

14. Method according to Claim 13,
**characterised in that**
the compound curve shape of a striking tool (14) is formed in a plane which extends in the longitudinal direction of the crankshaft (4), while a spherical shape is formed in a plane perpendicular to the longitudinal direction.

15. Method according to one of Claims 1 to 14, **characterised in that**
the pulsed-pressure apparatuses or striking machines (1) are each oriented with their longitudinal axes in the striking direction, and **in that** the internal compressive stresses are introduced by in each case only one striking tool (14), which is arranged in the associated pulsed-pressure apparatus or striking machine (1).

## Revendications

1. Procédé pour renforcer la résistance à la vibration à long terme, en particulier la résistance à la flexion alternée et la résistance à la torsion alternée, de vilebrequins, en particulier de gros vilebrequins, par martelage local de zones fortement sollicitées comme les congés, les débouchés de perçages et les transitions de section, au moyen de machines à impulsions de compression ou de dispositifs de frappe qui introduisent des contraintes internes de compression dans le vilebrequin au moyen d'outils de frappe qui décrivent exclusivement un mouvement relatif dans un plan perpendiculaire à la surface du segment de vilebrequin,
**caractérisé en ce que,**
le vilebrequin (4) est mis en rotation continuelle pendant le traitement, et **en ce que**, pendant l'introduction de la contrainte interne de compression, lors de l'impact de l'outil de frappe (14) sur le segment de vilebrequin à traiter, le temps d'action de l'outil de frappe (14) et les pressions de frappe sont choisis de manière que le mouvement de rotation du vilebrequin (4) soit arrêté à force.

2. Procédé selon la revendication 1,
**caractérisé en ce que**
la fréquence de frappe de l'outil de frappe (14) est comprise entre 0,1 et 20 Hz, de préférence entre 1 et 10 Hz.

3. Procédé selon la revendication 2,
**caractérisé en ce que**
la fréquence de frappe de l'outil de frappe (14) est comprise entre 3 et 6 Hz.

4. Procédé selon la revendication 1,
**caractérisé en ce que**
les pressions de frappe de l'outil de frappe (14) sont comprises entre 10 et 300 bars, de préférence entre 30 et 130 bars.

5. Procédé selon la revendication 4,
**caractérisé en ce que**
les pressions de frappe de l'outil de frappe (14) sont comprises entre 50 et 110 bars.

6. Procédé selon l'une des revendications 1 à 5,
**caractérisé en ce que**
la température dans la région du segment de vilebrequin à traiter est inférieure à 65°C, et de préférence comprise entre 12 et 25°C.

7. Procédé selon la revendication 1,
**caractérisé en ce que**
l'introduction de contraintes internes de compression est exécutée par les outils de frappe (14) sur des vilebrequins (4) qui ont déjà été traités antérieurement par un procédé de renforcement des propriétés de résistance à long terme.

8. Procédé selon la revendication 7,
**caractérisé en ce que**
l'introduction de contraintes internes de compression par les outils de frappe (14) a lieu après une trempe du vilebrequin (4) par induction.

9. Procédé selon l'une des revendications 1 à 8,
**caractérisé en ce que**
après l'introduction de contraintes internes de compression par les outils de frappe (14), les contraintes internes de compression proches de la surface sont réduites par enlèvement de la surface du segment de vilebrequin à traiter.

10. Procédé selon la revendication 9,
**caractérisé en ce que**
la surface du segment de vilebrequin traité est enlevée jusqu'à 3 mm, de préférence entre 0,3 et 2 mm.

11. Procédé selon la revendication 9 ou 10,
**caractérisé en ce que**
l'enlèvement s'effectue par meulage, tournage ou fraisage.

12. Procédé selon l'une des revendications 1 à 11,
**caractérisé en ce que,**
dans le cas d'une conformation en anse de panier du segment de vilebrequin à traiter, les arrondis de raccordement continus formés en tant que profil préalable, sont densifiés par l'introduction des contraintes internes de compression au moyen des outils de frappe (14') et, ensuite, les arrondis de raccordement sont mis au profil final en anse de panier nécessaire par un procédé d'enlèvement de la surface.

13. Procédé selon l'une des revendications 1 à 12,
**caractérisé en ce que**
dans le cas d'une conformation en anse de panier du segment de vilebrequin à traiter, les outils de frappe (14) sont pourvus de la forme d'anse de panier souhaitée.

14. Procédé selon la revendication13,
**caractérisé en ce que**
la forme d'anse de panier d'un outil de frappe (14) est réalisée dans un plan qui s'étend dans la direction longitudinale du vilebrequin (4), tandis qu'une forme sphérique est formée dans un plan perpendiculaire à la direction longitudinale.

15. Procédé selon l'une des revendications 1 à 14,
**caractérisé en ce que**
les dispositifs d'impulsions de compression ou machines de frappe (1) sont orientés à chaque fois avec leurs axes longitudinaux dans la direction de la frappe, et **en ce que** l'introduction de contraintes internes de compression est réalisée à chaque fois par un seul outil de frappe (14) agencé dans le dispositif d'impulsions de compression ou dans la machine de frappe (1) correspondante.
